# EUROPEAN PATENT SPECIFICATION

(11) **EP 3 326 805 B1**
(45) Date of publication and mention of the grant of the patent: **27.05.2020**
(21) Application number: 17202055.4
(22) Date of filing: 16.11.2017
(51) Int. Cl.: B32B 7/12, B32B 15/08, B32B 15/18, B32B 27/06, B32B 27/34, F16C 41/00, B32B 27/18, B32B 1/00, B32B 3/04

(54) **MAGNETIC ENCODER AND METHOD FOR PRODUCING THE SAME**
MAGNETISCHER CODIERER UND VERFAHREN ZUR HERSTELLUNG DAVON
CODEUR MAGNÉTIQUE ET SON PROCÉDÉ DE PRODUCTION

(30) Priority: 29.11.2016 JP 2016231332
(43) Date of publication of application: 30.05.2018
(73) Proprietor: Nakanishi Metal Works Co., Ltd., Kita-ku Osaka-shi Osaka 530-8566 (JP)
(72) Inventor: ITO, Yoshihiro, Osaka, 530-8566 (JP)
(74) Representative: Vossius & Partner Patentanwälte Rechtsanwälte mbB

(56) References cited:
- EP-A1- 2 829 755
- WO-A1-2015/145482
- WO-A1-2015/146188
- JP-A- 2004 269 921
- JP-A- 2006 170 308

## Description

### TECHNICAL FIELD

The present invention relates to a magnetic encoder to be used in detection of a rotation number (rotation speed) of a rotator, for example, a magnetic encoder to be used in a device for detecting a rotation number of an automobile wheel, a rotation number detector for a relatively rotating bearing section, or the like, and a method for producing the magnetic encoder.

### BACKGROUND

A magnetic encoder to be employed in a rotation speed detector for detecting a rotation speed of an automobile wheel has conventionally included a core metal that is a fixing member attachable to a rotator, and a substantially annular magnet section attached to the core metal and magnetized multi-polarly in a circumferential direction, the core metal being fixed to the magnet section with an adhesive interposed therebetween.

For the core metal, a stainless steel material having excellent corrosion resistance, such as SUS 430, is used for preventing corrosion that is caused when the magnetic encoder is used in an outdoor air exposure environment (e.g. Japanese Patent No. 4312149 and Japanese Patent No. 4192513). However, use of a stainless steel material not only increases a material cost, but also deteriorates press processability.

When a cold rolled steel plate containing iron is used for the core metal, the material cost can be kept low, but the cold rolled steel plate has noticeably poor corrosion resistance.

JP2006170308 discloses a rolling bearing unit for wheel. It is known that a surface of the iron material is subjected to hot-dip zinc plating as a technique for suppressing iron rust. In particular, an iron material subjected to hot-dip zinc-aluminum-magnesium alloy plating using aluminum and magnesium as alloy elements is known to have excellent corrosion resistance.

However, as a core metal of a magnetic encoder, a steel plate obtained by subjecting a surface of the cold rolled steel plate to hot-dip zinc-aluminum-magnesium alloy plating has the problem that when an adhesive for forming a plastic magnet section of the magnetic encoder is applied to a surface of the steel plate, adhesive strength between a plated layer and an adhesive layer is low, so that the magnetic encoder cannot withstand practical use.

### SUMMARY OF THE INVENTION

An object of the present invention is to provide a magnetic encoder having, as a core metal, a cold rolled steel plate subjected to hot-dip zinc plating, the magnetic encoder being excellent in stability of adhesive strength between a plated layer and an adhesive layer, and a method for efficiently producing the magnetic encoder.

The present inventor has extensively conducted studies for solving the above-mentioned problems, and resultantly found for the first time that a corrosion product that is a source of a rust-prevention force in plating using a zinc-aluminum-magnesium alloy adversely affects the adhesiveness of an adhesive. As a result of further study, the present inventor has ensured that by forming a film of a phosphoric acid salt on a surface of a plated layer including a zinc-aluminum-magnesium alloy, stability of adhesive strength between the plated layer and an adhesive layer is successfully improved while generation of a corrosion product at the surface of the corrosion is suppressed. Thus, the present invention has been completed.

The subject matters of the present invention are as follows.
[1] A magnetic encoder being attachable to a rotator provided in a device for detecting a rotation number of an auto-mobile wheel or a rotation number detector for a relatively rotatable bearing section, includes a core metal made of a cold rolled steel plate; a substantially annular plastic magnet section magnetized multi-polarly in a circumferential direction; a plated layer containing a zinc-aluminum-magnesium alloy stacked on a surface of the core metal; a phosphoric acid salt film layer stacked on a surface of the plated layer; an adhesive layer stacked on the phosphoric acid salt film layer; and a plastic magnet layer stacked on the adhesive layer.
[2] In the magnetic encoder according to [1], the cold rolled steel is at least one steel material selected from the group consisting of SPCC, SPCD and SPCE as specified in JIS G 3141.
[3] In the magnetic encoder according to [1] or [2], the adhesive layer includes a phenol-based adhesive or an epoxy-based adhesive.
[4] In the magnetic encoder according to any one of [1] to [3], a silane-based or epoxy-based primer is applied to a surface of the phosphoric acid salt film layer.
[5] A method for producing a magnetic encoder includes: applying an adhesive onto a phosphoric acid salt film layer of a core metal made of a cold rolled steel plate with a zinc-aluminum-magnesium alloy plated layer formed on a surface thereof and the phosphoric acid salt film layer formed on a surface of the plated layer; drying and solidifying the adhesive at a temperature lower than a crosslinking and curing reaction starting temperature of the adhesive; injection-molding a molten plastic magnet material on a surface of the adhesive; and performing a heat-curing treatment at a temperature equal to or higher than the crosslinking and curing reaction starting temperature of the adhesive.
[6] In the method for producing a magnetic encoder according to [5], the cold rolled steel is at least one steel material selected from the group consisting of SPCC, SPCD and SPCE as specified in JIS G 3141.

The magnetic encoder of the present invention has a cold rolled steel plate as a core metal, and therefore requires a lower material cost as compared to a magnetic encoder having a stainless steel plate as a core metal. Further, in the magnetic encoder of the present invention, a plated layer containing a zinc-aluminum-magnesium alloy is stacked on a surface of the core metal, a phosphoric acid salt film layer is stacked on a surface of the plated layer, an adhesive layer is stacked on the phosphoric acid salt film layer, and a plastic magnet layer is stacked on the adhesive layer, and thus stability of adhesive strength between the plated layer and the adhesive layer can be improved while generation of a corrosion product at the surface of the plated layer is prevented. In particular, the magnetic encoder of the present invention can be used for a long period of time as peeling of the plastic magnet section is inhibited even when the magnetic encoder is exposed to an environment which is specific to a magnetic encoder and more easily corrodes a metal, i.e. a situation in which the magnetic encoder is rotated at a high speed in an outdoor air exposure environment.

### BRIEF DESCRIPTION OF THE DRAWINGS

FIG. 1A is schematic explanatory view showing one example of a magnetic encoder of the present invention;
FIG. 1B is a perspective view showing a part of the magnetic encoder of the present invention in a cutout manner;
FIG. 2 is a longitudinal sectional view showing one example of an injection molding die for production of a magnetic encoder, which is used in a production method of the present invention;
FIG. 3 is an enlarged longitudinal sectional view of a main part of the injection molding die shown in FIG. 2;
FIG. 4 is a longitudinal sectional view showing an example of a bearing device including a magnetic encoder according to an embodiment of the present invention;
FIG. 5 is an enlarged longitudinal sectional view of a main part of the bearing device shown in FIG. 4;
FIG. 6A a schematic explanatory view showing one example of a magnetic encoder of the present invention;
FIG. 6B is a perspective view showing a part of the magnetic encoder of the present invention in a cutout manner;
FIG. 7 is a longitudinal sectional view showing an example of a bearing device including the magnetic encoder shown in FIGS. 6A and 6B; and
FIG. 8 is a schematic perspective view showing a dumbbell test piece for evaluation of adhesive strength, which is prepared in a comparative test of peeling strength, and is subjected to a heat-curing treatment at a temperature equal to or higher than a crosslinking reaction starting temperature (1 50°C), so that a crosslinking reaction is caused to carry out a curing reaction in a thermosetting resin adhesive layer.

### DETAILED DESCRIPTION OF THE PREFERRED EMBODIMENTS

Hereinafter, the present invention will be described in detail.

### (Magnetic encoder)

A magnetic encoder of the present invention includes a core metal made of a cold rolled steel plate;
a substantially annular plastic magnet section magnetized multi-polarly in a circumferential direction;
a plated layer containing a zinc-aluminum-magnesium alloy stacked on a surface of the core metal;
a phosphoric acid salt film layer stacked on a surface of the plated layer;
an adhesive layer stacked on the phosphoric acid salt film layer; and
a plastic magnet layer stacked on the adhesive layer.

The magnetic encoder of the present invention may be a magnetic encoder which can be attached to, for example, a device for detecting a rotation number of an automobile wheel, or a rotation number detector for a relatively rotating bearing section.

In the present invention, the core metal is a substantially annular member which can be attached to a rotator provided in a device for detecting a rotation number of an automobile wheel, a rotation number detector for a relatively rotating bearing section. The size of the core metal is not particularly limited as long as it conforms to the size of the rotator to be attached.

The core metal is formed of a cold rolled steel plate. As the cold rolled steel is preferably SPCC for general use, SPCD for drawing and SPCE for deep drawing as specified in JIS G 3141 are preferable because they are easily acquired and are excellent in terms of a material cost.

The thickness and hardness of the cold rolled steel plate are not particularly limited, and may be adjusted according to a type of the magnetic encoder, a location at which the magnetic encoder is attached, and so on.

As the cold rolled steel plate, one subjected to glittering finishing, or one subjected to finishing for leaving fine irregularities on a surface can be used. Further, the cold rolled steel plate may be subjected to a roughening treatment.

The roughness Ra of the coated surface of the cold rolled steel plate that underwent the roughening treatment is preferably within a range of 0.5 to 2 µm.

The roughness of the coated surface can be measured in accordance with JIS B0601-1994.

The rotator to which the magnetic encoder of the present invention is attached may be a rotator to which a conventional magnetic encoder is attached, such as a device for detecting a rotation number of an automobile wheel, or a rotation number detector for a relatively rotating bearing section.

When the magnetic encoder is attached to the rotator, the magnetic encoder is rotated with rotation of the rotator. Rotation of the substantially annular plastic magnet section magnetized multi-polarly in a circumferential direction is detected by a sensor attached so as to face the plastic magnet section, so that a rotation speed (rotation number) of the rotator can be detected. The magnetic encoder attachment position in the rotator may be the same as in the case of known magnetic encoders, and for example, the magnetic encoder is attached at the outer end of a circular rotator in the axis direction, but the magnetic encoder attachment position is not particularly limited.

The plated layer which is stacked on the surface of the cold rolled steel plate, and contains a zinc-aluminum-magnesium alloy is a layer for improving the corrosion resistance of the cold rolled steel plate, and the plated layer is formed of a hot-dip zinc plating to which aluminum and magnesium are added as alloy elements.

The plating containing a zinc-aluminum-magnesium alloy may be prepared by applying molten zinc mixed with predetermined amounts of an aluminum material and a magnesium material, to the surface of the cold rolled steel plate with a plating method known in the art.

The amounts of aluminum and magnesium in the zinc-aluminum-magnesium alloy are not particularly limited. A commercially available hot-dip zinc-aluminum-magnesium alloy plated steel plate (steel plate obtained by hot-dip plating in a plating bath including 5.0 to 13.0% of aluminum, 2.0 to 4.0% of magnesium, total 1.0% or less of other elements, and zinc as a balance in terms of a mass ratio) can also be used.

The phosphoric acid salt film layer stacked on the surface of the plated layer is adopted for improving stability of adhesive strength between the plated layer and the later-described adhesive layer by preventing generation of a corrosion product at the surface of the plated layer. In particular, the magnetic encoder is rotated at high speed in an outdoor air exposure environment in which the core metal is easily corroded and the plastic magnet section is easily peeled off. However, the phosphoric acid salt film layer and then the adhesive layer are sequentially stacked on the surface of the plated layer in the magnetic encoder, thereby improving the corrosion resistance of the magnetic encoder, and further, making the plastic magnet section hardly peeling off.

The phosphoric acid salt film layer includes phosphoric acid salts such as iron phosphate, zinc phosphate, manganese phosphate, and calcium phosphate. The phosphoric acid salts may be used singly, or used in mixture of two or more thereof.

The phosphoric acid salt film layer can be formed on a surface of the plating by applying thereto a film including the phosphoric acid salt using a known method commonly called as a parkerizing treatment or lubrite treatment.

For example, the basic process for the phosphoric acid salt film treatment includes a "degreasing step" of removing oils and fats and contaminants deposited on a surface of a metal material, a "rinsing step" of washing out a degreasing agent component remaining on the surface of the metal material, a "film formation step" of forming a phosphoric acid salt film, and a "rinsing step" of washing out a film-formation agent component remaining on the surface of the metal material. Further, in the case of the zinc phosphate film treatment, a "surface adjustment step" is provided just before the "film formation step". In the "surface adjustment step", the surface of the metal material is adjusted so as to obtain favorable zinc phosphate film crystals. The surface adjustment agent contains a component serving as a nucleus of zinc phosphate film crystals, and the component is deposited on the surface of the metal material, so that zinc phosphate film crystals are generated and grown from the surface adjustment component. When the surface adjustment step is carried out, zinc phosphate film crystals become uniform and dense, and a film formation reaction easily takes place, so that the treatment time for the film formation step is reduced as compared to a case where the surface adjustment step is not carried out.

The thickness of the phosphoric acid salt film layer is not particularly limited, and may be set within an appropriate range according to a type of the magnetic encoder.

The adhesive layer stacked on the phosphoric acid salt film layer is adopted for fixing the plastic magnet section to a surface of the phosphoric acid salt film layer, and includes an adhesive such as a thermosetting resin adhesive.

The thermosetting resin adhesive may be any adhesives used in a common magnetic encoder, and examples thereof include phenol resin-based adhesives and epoxy resin-based adhesives.

As the phenol resin-based adhesive, for example, an adhesive obtained by dissolving a novolak-type phenol resin or a resol-type phenol resin and a curing agent such as hexamethylenetetramine in a solvent such as methanol or methyl ethyl ketone can be used. An adhesive with a novolak-type epoxy resin mixed with the phenol resin-based adhesive for improving adhesion can also be used.

Examples of the epoxy resin-based adhesive include adhesives which have a one-liquid-type epoxy resin-based adhesive as an undiluted solution and can be diluted with a solvent. The one-liquid-type epoxy-based adhesive includes an epoxy resin and a curing agent. To the one-liquid-type epoxy-based adhesive may be added, depending on the necessity, other epoxy compound to be used as a reactive diluent, a curing promoter for increasing the heat-curing rate, an inorganic filler having an effect of improving heat resistance and curing strain resistance, crosslinked rubber fine particles for improving flexibility that is exhibited upon deformation of the adhesive when stressed, and so on.

Examples of the epoxy resin include bisphenol A-type epoxy resins, bisphenol F-type epoxy resins, bisphenol AD-type epoxy resins, naphthalene-type epoxy resins, biphenyl-type epoxy resins, glycidylamine-type epoxy resins, cycloaliphatic epoxy resins, dicyclopentadiene-type epoxy resins, phenol novolak-type epoxy resins, polyester-modified epoxy resins, and silicon-modified epoxy resins. Here, the epoxy resin is not particularly limited to the above examples.

Examples of the curing agent include amine-based curing agents such as aliphatic amines, cycloaliphatic amines and aromatic amines; polyamide-based curing agents; acid anhydride-based curing agents such as phthalic anhydride, methyltetrahydrophthalic anhydride, endomethylenetetrahydrophthalic anhydride, methyleneendomethylenetetrahydrophthalic anhydride, methylhexahydrophthalic anhydride, and trimellitic anhydride; secondary or tertiary amines; imidazoles; and curing agents such as 1,3-bis(hydrazinocarboethyl)-5-isopropylhydantoin, eicosanedioic dihydrazide, adipic dihydrazide, dicyandiamide, and 7,11-octadecadiene-1,18-dicarbohydrazide. Here, the curing agent is not particularly limited to the above examples.

Examples of the reactive diluent include alkyl monoglycidyl ethers, alkyl diglycidyl ethers and alkyl phenol monoglycidyl ethers, and specific examples thereof include 2-ethylhexyl glycidyl ether, allyl glycidyl ether, phenyl glycidyl ether, and t-butylphenyl glycidyl ether. Here, the reactive diluent is not particularly limited to the above examples.

The curing promoter is used for increasing the rate of a curing reaction when a curing agent such as an acid anhydride-based curing agent or dicyandiamide is used. Examples of the curing promoter include imidazole compounds such as 1-cycanoethyl-2-ethyl-4-methylimidazole, 2-methylimidazole, 2-ethyl-4-methylimidazole, 2-undecylimidazole, and 2-phenylimidazole; carboxylic acids such as adipic acid; tertiary amines and tertiary amine salts such as dimethylbenzylamine and tris(dimethylaminomethyl)phenol; phosphines and phosphonium salts such as triphenylphosphine, tetraphenylphosphonium/tetraphenyl borate; quaternary ammonium salts such as tetrabutylammonium bromide; and alkyl ureas such as 3-(3',4'-dichlorophenyl)-1,1-dimethyl urea. Here the curing promoter is not particularly limited to the above examples.

Examples of the inorganic filler include fused silica powders, crystalline silica, quartz glass powders, crystalline glass powders, glass fibers, alumina powders, talc, mica, aluminum powders, titanium oxide, silica titania, boron nitride, aluminum nitride, silicon nitride, magnesia and magnesium silicate, and they may be used singly, or in combination of two or more thereof.

Examples of the crosslinked rubber fine particles include fine particles of vulcanized acrylonitrile butadiene rubbers having carboxyl groups in the molecular chain, acryl-based rubbers, silicone rubbers, and urethane rubbers. The crosslinked rubber fine particles are, for example, ultrafine particles having a particle size of 1 µm or less, preferably about 30 to 200 nm in terms of an average particle size, but the particle size is not particularly limited.

Examples of the solvent contained in the epoxy resin adhesive include aromatic hydrocarbons such as toluene and xylene, mixtures of such hydrocarbons with ketones and/or alcohols, and naphthene-based hydrocarbons such as cyclohexane. Here, the solvent is not particularly limited to the above examples.

Preferably, a surface of the phosphoric acid salt film layer on which the adhesive is dried and solidified is subjected to a primer treatment for improving the anchorage effect to the adhesive.

Examples of the primer include silane-based primers, phenol-based primers, and epoxy-based primers.

The plastic magnet section stacked on the adhesive layer is a layer which contains a magnet material including a magnetic material powder, a thermoplastic resin, and additives as necessary. The plastic magnet section is a substantially annular member attached at a desired position on a surface of the magnetic encoder including the core material. The plastic magnet section serves as one of material layers that form the magnetic encoder, and forms a plastic magnet layer. For detecting a rotation speed (rotation number) of the fixed rotator, the plastic magnet section is magnetized multi-polarly so as to present a plurality of N-poles and S-poles along a circumferential direction.

The magnetic material powder that is one of materials that form the plastic magnet section (plastic magnet material) may be a magnetic material powder that is used in a plastic magnet section of a commercially available magnetic encoder produced by insert molding. For example, a ferrite-based magnetic powder such as a strontium ferrite or barium ferritemagnetic powder, or a rare earth magnetic powder such as a neodymium-based or samarium-based magnetic powder can be used as the magnetic material powder. For improving the magnetic characteristic of ferrite, lanthanum, cobalt, may be mixed, or ferrite may be partially replaced by a rare earth magnetic material powder such as a neodymium-iron-boron, samarium-cobalt or samarium-iron magnetic material powder. These magnetic material powders may be used singly, or in combination of two or more thereof.

As the thermoplastic resin that forms the plastic magnet material, for example, a thermoplastic resin such as polyamide (PA6, PA12, PA612) or polyphenylene sulfide (PPS) can be suitably used. The properties, such as the melting point and the bend elastic modulus, of the thermoplastic resin are not particularly limited.

Examples of the additives that form the plastic magnet material include organic additives such as carbon fibers, inorganic additives such as glass beads, glass fibers, talc, mica, silicon nitride (ceramic), and crystalline (non-crystalline) silica, benzenesulfonic acid alkyl amides, toluenesulfonic acid alkyl amides, and hydroxybenzoic acid alkyl esters. They may be used singly, or in combination of two or more thereof.

The contents of the thermoplastic resin, the magnetic material powder, the additives, and so on in the plastic magnet section are not particularly limited. Any contents that are individually comparable to the respective components in a commercially available plastic magnet material can be adopted.

The thickness and the width of the plastic magnet section stacked on the adhesive layer in the magnetic encoder of the present invention are not particularly limited. The thickness and the width may be set within an appropriate range according to a kind of the magnetic encoder.

One example of the magnetic encoder of the present invention will now be described in detail with reference to the drawings.

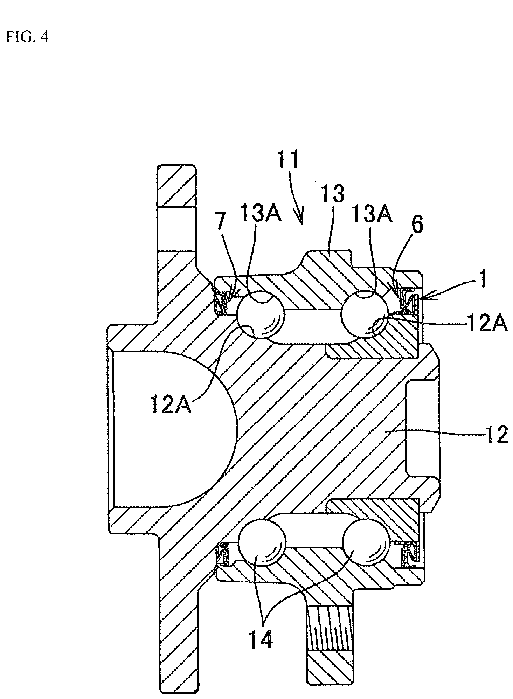

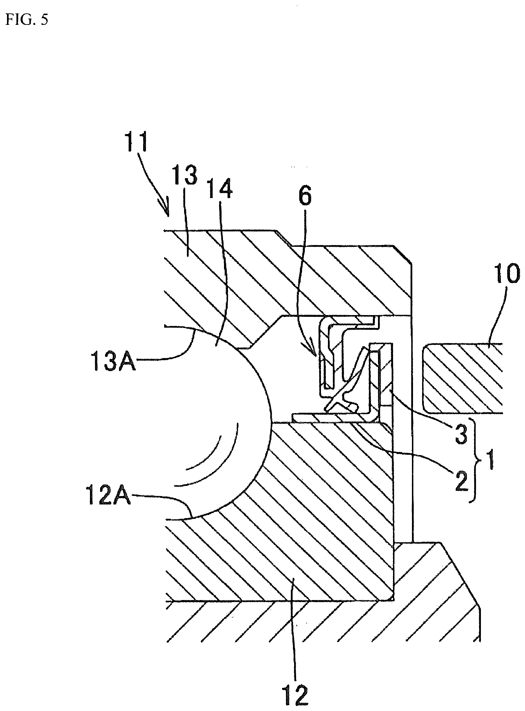

As shown in the longitudinal sectional view in FIG. 4 and the enlarged longitudinal sectional view of a main part in FIG. 5, a bearing device 11 including a magnetic encoder 1 according to an embodiment of the present invention includes an inner ring 12 with an inner ring orbital surface 12A on its outer periphery surface; an outer ring 13 with an outer ring orbital surface 13A on its inner peripheral surface; a bearing having rolling bodies 14, 14 that roll between the inner ring orbital surface 12A and the outer ring orbital surface 13A; the magnetic encoder 1 situated at one end of the bearing in the axis direction and fixed to the inner ring 12; a sensor 10 which is fixed to the outer ring 13, and faces a magnetic pole of the magnetic encoder 1 to sense rotation of the magnetic encoder 1; seal members 6 and 7 disposed, respectively, on one end and the other end of the bearing in the axis direction; and so on.

Here, the magnetic encoder 1 and the sensor 10 form a rotation speed detector. The magnetic encoder 1 is attached to the inner ring 12 as a rotating ring, and magnetized multi-polarly in a circumferential direction so as to present N-poles and S-poles at fixed intervals. The sensor 10 is attached to the outer ring 13 as a fixed ring.

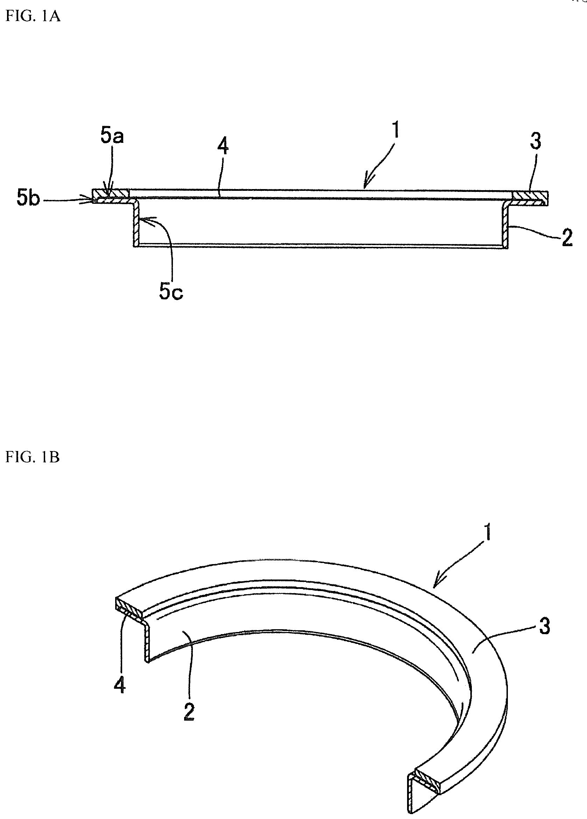

FIGS. 1A and 1B show the magnetic encoder 1 of the present invention. The magnetic encoder includes a core metal 2 attachable to a rotator; and a substantially annular plastic magnet section 3 attached to the core metal 2 and magnetized multi-polarly in a circumferential direction. A surface of the core metal 2 is provided with an intermediate layer 4 in which a plated layer containing a zinc-aluminum-magnesium alloy, a phosphoric acid salt film layer, and an adhesive layer are stacked in this order, and the plastic magnet section 3 (plastic magnet layer 3) is stacked on a surface of the adhesive layer.

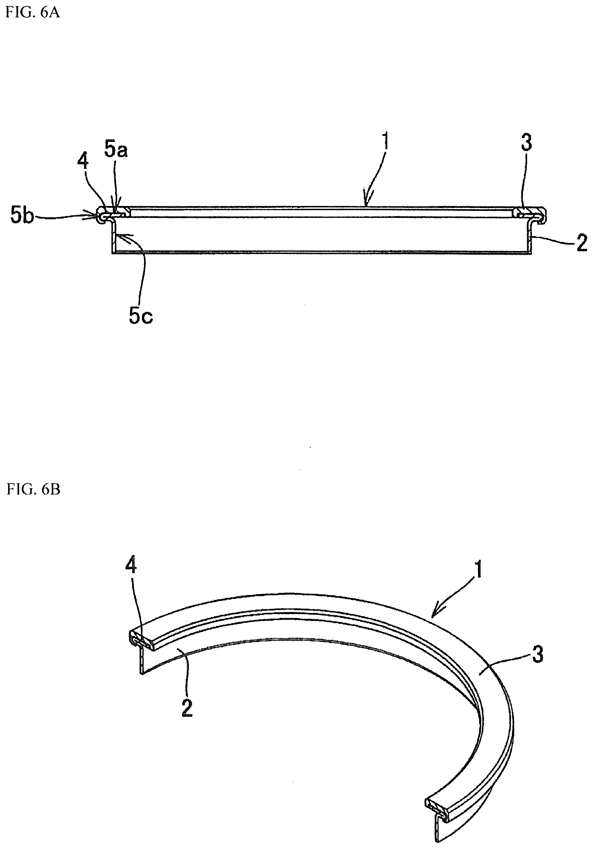

The core metal 2 has a substantially annular shape as shown in FIGS. 1A and 1B, but the shape of the core metal 2 is not particularly limited as long as it is a shape matching a rotator to be attached. For example, the cross-sectional shape of the core metal 2 may be an outwardly protruding inverted-L shape as shown in FIGS. 1A and 1B, or an inwardly protruding inverted-L shape (not illustrated). The cross-sectional shape of the core metal 2 may be a T shape as shown in FIGS. 6A and 6B.

For example, the magnetic encoder 1 including the core metal 2 having an inverted-L shape in the cross section as shown in FIGS. 1A and 1B can be fitted at the outer end in the axis direction of the inner ring 12 as a rotator as shown in FIG. 5.

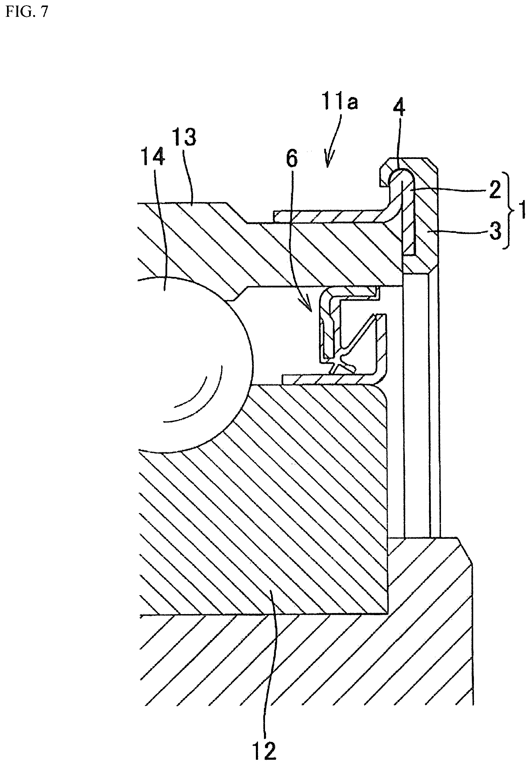

For example, the magnetic encoder 1 including the core metal 2 having a T shape in the cross section can be fitted at the outer end, in the axis direction, of the outer ring 13 as a rotator in an outer ring rotation-type bearing device 1 la as shown in the longitudinal sectional view in FIG. 7.

The core metal 2 is formed by, for example, subjecting a magnetic cold rolled steel plate to press processing such as punching or drawing. The thickness and the width of the steel plate are not particularly limited, and can be appropriately determined according to a shape of the rotator to which the magnetic encoder is attached.

The thickness of each of the layers including the plated layer containing a zinc-aluminum-magnesium alloy, a phosphoric acid salt film layer, and an adhesive layer, which are formed on a surface of the core metal 2, is not particularly limited, and may be appropriately determined according to a shape and size of the core metal 2 and a shape of the rotator to which the magnetic encoder is attached.

The plastic magnet section 3 may be formed in a substantially annular shape on a surface of the adhesive layer, and the position of the plastic magnet section 3 may be determined according to a shape of the core metal 2. For example, when the cross-sectional shape of the core metal 2 is an outwardly protruding inverted-L shape as shown in FIGS. 1A and 1B, the plastic magnet section 3 may be attached so as to cover an upper surface 5a and an outer surface 5b of the core metal 2, or may be attached so as to cover a part or the whole of an inner surface 5c of the core metal.

When the cross-sectional shape of the core metal 2 is a T shape as shown in FIGS. 6A and 6B, or the cross-sectional shape of the core metal 2 is an inwardly protruding inverted-L shape (not illustrated), the plastic magnet section 3 may be attached so as to cover the upper surface 5a and/or the inner surface 5c, or may be attached so as to cover a part or the whole of the outer surface 5b.

The thickness and the width of the plastic magnet section 3 are not particularly limited.

### (Method for producing magnetic encoder)

A method for producing a magnetic encoder having the above-mentioned configuration includes, for example:
applying an adhesive onto a phosphoric acid salt film layer of a core metal made of a cold rolled steel plate with a zinc-aluminum-magnesium alloy plated layer formed on a surface thereof and the phosphoric acid salt film layer formed on a surface of the plated layer;
drying and solidifying the adhesive at a temperature lower than a crosslinking and curing reaction starting temperature of the adhesive;
injection-molding a molten plastic magnet material on a surface of the adhesive; and
performing a heat-curing treatment at a temperature equal to or higher than the crosslinking and curing reaction starting temperature of the adhesive.

For example, the core metal made of a cold rolled steel plate with a zinc-aluminum-magnesium alloy plated layer formed on a surface thereof and a phosphoric acid salt film layer formed on a surface of the plated layer may be prepared by forming a zinc-aluminum-magnesium alloy plated layer on a surface of a commercially available cold rolled steel plate, and forming a phosphoric acid salt film layer on a surface of the plated layer, or prepared by forming a phosphoric acid salt film layer on a surface of a commercially available cold rolled steel plate provided with a zinc-aluminum-magnesium alloy plated layer. Alternatively, a commercially available steel plate with a zinc-aluminum-magnesium alloy plated layer formed on a surface of a cold rolled steel plate and a phosphoric acid salt film layer formed on a surface of the plated layer may be used as the core metal.

In the method for producing a magnetic encoder according to the present invention, an adhesive is applied onto the phosphoric acid salt film layer provided on the core metal, and the adhesive is dried and solidified at a temperature lower than the crosslinking and curing reaction starting temperature of the adhesive.

As a method for applying an adhesive to a surface of the phosphoric acid salt film layer, the surface of the phosphoric acid salt film layer may be immersed in a liquid adhesive, or an adhesive may be applied using a brush, a roller, a spray.

The temperature condition for the application of the adhesive is not particularly limited as long as the adhesive is not solidified, and a crosslinking and curing reaction hardly occurs. For example, the adhesive may be applied at room temperature.

The thickness or resin content of the applied adhesive is not particularly limited as long as they satisfy requirements for bonding and fixing the later-described plastic magnet section.

In this step, the adhesive applied to the surface of the phosphoric acid salt film layer is dried and fixed to the surface of the phosphoric acid salt film layer by volatilizing a solvent contained in the adhesive at a temperature lower than a temperature at which the adhesive starts a crosslinking and curing reaction.

The adhesive has such a property that it starts a crosslinking reaction to start curing when heated to a predetermined temperature, and thus in the present invention, the temperature at which the adhesive starts the crosslinking reaction to start curing is referred to as a "temperature at which the adhesive starts a crosslinking and curing reaction" or a "crosslinking and curing reaction starting temperature of the adhesive".

The "drying and solidification" of the adhesive means that a solvent contained beforehand in the adhesive to be applied is volatilized to solidify the component of the adhesive, before a crosslinking and curing reaction is started by heating.

The degree of evaporation of the solvent in the drying and solidification is not particularly limited. The solvent may be volatilized to the degree that when the surface of the applied adhesive is touched by a finger, the adhesive does not stick to the finger, or to the degree that little solvent remains. In particular, for easy bonding of the later-described plastic magnet section, it is preferable to perform drying and solidification to the degree that little solvent remains. The applied adhesive slightly changes in color as it is dried, and therefore the degree of drying and solidification can be examined by visually observing the state.

The temperature in the drying and solidification is not limited as long as it is lower than a temperature at which the adhesive starts a crosslinking and curing reaction, and specifically, the temperature in the drying and solidification may be appropriately determined according to an adhesive to be used. For example, when the adhesive is a phenolic resin adhesive, it is desirable to set the temperature to lower than 110°C, preferably 25 to 105°C for performing drying and solidification in a short time.

For efficiently drying and solidifying the adhesive, the drying and solidification may be performed while the temperature is elevated in a plurality of stages from a predetermined temperature.

Here, the difference in temperature between the first stage and the second stage, is not particularly limited.

The time of drying and solidification is not limited as long as it ensures that the solvent in the adhesive can be evaporated to solidify a solid component in a thermosetting resin as an adhesive component, and the time of drying and solidification may be appropriately determined according to a temperature in drying and solidification, but it is preferable to set the time of drying and solidification to 30 to 60 minutes or more for making it possible to stably perform drying and solidification on an industrial scale.

Examples of the drying and solidification means include a method in which a gas adjusted to a predetermined temperature is blown to the surface of the adhesive applied to the phosphoric acid salt film layer, a method in which the adhesive is left standing at a predetermined temperature under a reduced pressure, and a method in which a core metal coated with the adhesive is left standing in a chamber adjusted to a predetermined temperature. These methods may be used in combination.

In the present invention, the adhesive is dried and solidified at a temperature lower than a temperature at which the adhesive starts a crosslinking and curing reaction as described above, and therefore it is not necessary to perform semi-curing in which it is difficult to control the heating temperature and time. Moreover, bonding strength between the adhesive and the plastic magnet section can be increased by suppressing a reduction in the number of reactive groups in the adhesive for bonding the adhesive to a molten resin of a plastic magnet material.

A die to be used in this step may be an injection molding die including: a substantially annular cavity which is capable of fixing a core metal with an adhesive dried and solidified on a surface thereof, and can be filled with the plastic magnet material; and a gate capable of injecting the molten plastic magnet material to the surface of the adhesive, in the cavity.

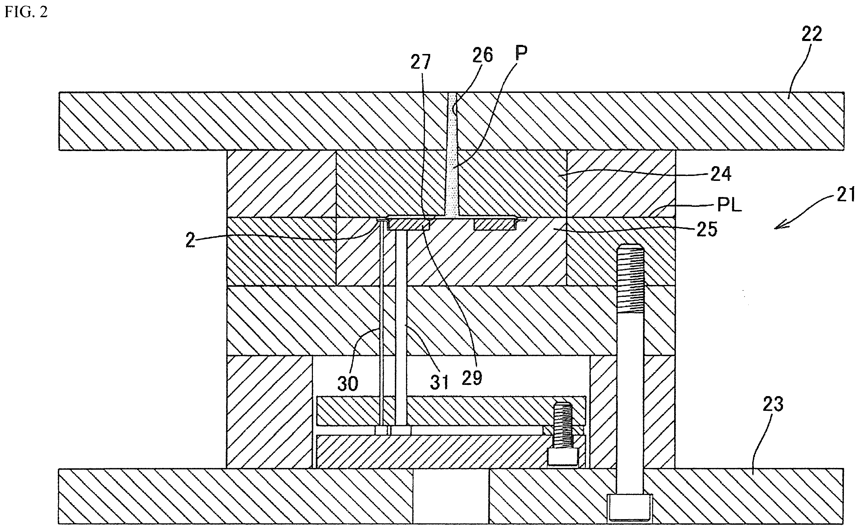

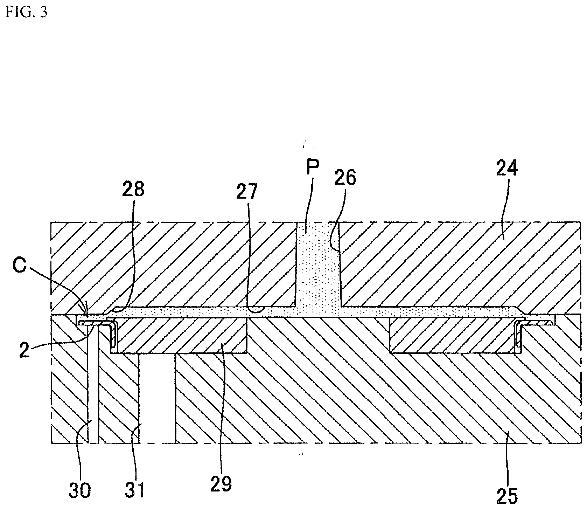

This step uses, for example, an injection molding die 21 of insert core type as shown in the longitudinal sectional view in FIG. 2 and the enlarged longitudinal sectional view of a main part in FIG. 3. The injection molding die 21 is intended to mold a magnetic encoder as a ring-shaped insert-molded article, and attached to an injection molding machine by fixing a fixed-side mounting plate 22 to a fixed plate with a bolt, and fixing a movable-side mounting plate 23 to a movable plate with a bolt.

A ring-shaped insert article with an adhesive applied to a bonding surface with the plastic magnet material, i.e. the core metal 2 made of a cold rolled steel plate with a zinc-aluminum-magnesium alloy plated layer formed on a surface thereof and a phosphoric acid salt film layer formed on the plated layer is disposed in a fixed-side die plate 24 and a movable-side die plate 25 to be die-fastened, and the molten plastic magnet material P is injected from a sprue 26, so that the molten plastic magnet material P passes through a runner 27 to be filled, from a gate 28, into a cavity C between the fixed-side die plate 24 and the movable-side die plate 25.

The direction of the sprue 26 (injection direction of molten plastic magnet material P) is a horizontal direction, in FIGS. 2 and 3. Here, the direction is not particularly limited.

The injection means is not particularly limited as long as the molten plastic magnet material can be injected onto the surface of the adhesive dried and solidified on the phosphoric acid salt film that is provided on the core metal and forms an outermost surface.

The temperature of the molten plastic magnet material is not particularly limited as long as it is set to a temperature at which the plastic has such a viscosity that it can be injected, and the plastic is not solidified, and for example, the temperature of the molten plastic magnet material is 200 to 360°C.

In this step, as shown in FIGS. 2 and 3, the molten plastic magnet material P is cooled and solidified, the movable-side die plate 25 is then opened from a parting line PL, and a molded article and an insert core 29 before gate cutting are pushed out by ejectors 30 and 31, and thereby taken out.

Next, the molded article and the insert core 29 before gate cutting, which are taken out from the die, are set in a jig, and pressed by a pusher to perform gate cutting, and thus a ring-shaped insert-molded article is obtained.

In the above description, the ring-shaped insert-molded article is an axial magnetic encoder, but the ring-shaped insert-molded article is not limited thereto, and may be one produced by applying an adhesive to a surface of a phosphoric acid salt film layer that forms the outermost surface of a core metal in a ring-shaped insert-molded article, disposing the core metal in a die, and injection-molding a molten plastic magnet material on the surface of the adhesive, such as a radial magnetic encoder, or an insert-molded article substituting for a ring-shaped metal.

The ring-shaped insert-molded article obtained in the injection molding step is then subjected to a heat-curing treatment at a temperature equal to or higher than a temperature at which a crosslinking and curing reaction is started in the adhesive, and thus a magnetic encoder is obtained.

In this step, the ring-shaped insert-molded article obtained in the injection molding step is subjected to a heat-curing treatment at a temperature equal to or higher than a temperature at which a crosslinking and curing reaction is started, whereby a crosslinking reaction is caused to occur in the dried and solidified adhesive existing between the phosphoric acid salt film layer stacked on the surface of the core metal and the plastic magnet section, so that the adhesive is cured, and thus the three members are integrated.

When the temperature at which the crosslinking and curing reaction is started is within a range of 110°C to 180°C, a crosslinking reaction can be caused to occur to carry out a curing reaction irrespective of the kind of resin to be used in the adhesive.

The heat-curing treatment may be performed by elevating the temperature gradually. For example, the temperature in the first stage is set within a range of 110°C to 140°C, and the temperature in the second stage is set within a range of 140°C to 180°C. The upper limit of the temperature equal to or higher than the crosslinking starting temperature may be set to a temperature exceeding 180°C for reducing the treatment time.

In the present invention, the plastic magnet section is magnetized multi-polarly in a circumferential direction. The plastic magnet section may be magnetized by, for example, performing injection molding in an adjusted magnetic field in the injection molding step to subject a magnetic powder to magnetic field orientation, or demagnetizing the magnetic encoder obtained in the heat-curing treatment, and then magnetizing the magnetic encoder so as to present N-poles and S-poles alternately in the circumferential direction of the plastic magnet section using a separately provided magnetizing device such as a magnetizing yoke.

### EXAMPLES

### (Example 1)

A SPCC plate (manufactured by Nisshin Steel Co., Ltd.) with a zinc-aluminum-magnesium alloy plated layer stacked on a surface thereof and a phosphoric acid salt film layer stacked on the plated layer was cut and processed into a metal dumbbell shape to prepare a test piece (having a length of 80 mm, a width of 25 mm, and a thickness of 2 mm).

A surface of the test piece was degreased, and then subjected to a primer treatment, and a thermosetting adhesive was applied to the surface of the test piece, and dried and solidified.

A molten plastic magnet material was then injection-molded on a surface of the adhesive, and a heat-curing treatment was performed to obtain an invention article 1.

In addition, except that a conventional material (SUS 430) was used as a test piece, the same procedure as in Example 1 was carried out to obtain a comparative article 1.

In addition, except that a SPCC plate (manufactured by Nisshin Steel Co., Ltd.) with a zinc-aluminum-magnesium alloy plated layer stacked on a surface thereof (no phosphoric acid salt film layer) was used as a test piece, the same procedure as in Example 1 was carried out to obtain a comparative article 2.

### (Test Example 1: peeling strength test)

For examining stability of adhesive strength between a test piece and a plastic magnet section in a magnetic encoder, the peeling strength was measured under three environments: (1) immediately after preparation; (2) after salt water adjusted to a salt concentration of 5% is continuously sprayed for 168 hours; and (3) after the salt water is continuously sprayed for 408 hours.

The environments (2) and (3) each correspond to an accelerated degradation test, which is intended to examine generation of rust and degradation of components such as an adhesive layer and a plastic magnet section.

Three to five invention articles 1 and comparative articles 1 and 2 were provided, and each subjected to the above-mentioned test. Averages of the results of the tests are shown in Table 1.

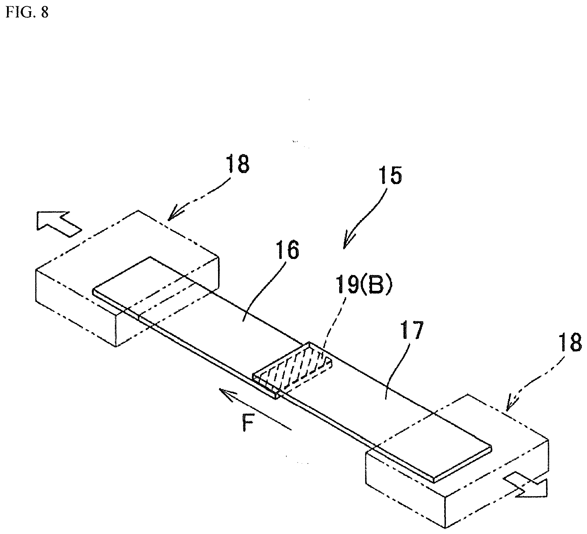

As shown in FIG. 8, a dumbbell test piece 15 was prepared, and the tensile strength was measured in the following manner using a precise universal tester 18.

First, a SUS 430 metal plate for a fixing member was processed to prepare a fixing member plate 16 (having a width of 25 mm, a length of 80 mm and a thickness of 2 mm).

Next, a surface of one end part of the fixing member plate 16 was coated with a phenol-based thermosetting resin adhesive B with a width of about 10 mm along a length direction F of the fixing member plate 16.

Next, the fixing member plate 16 was dried until organic solvents (methyl ethyl ketone, methyl isobutyl ketone and methanol) were completely removed, thereby forming a thermosetting resin adhesive layer 19.

Next, the fixing member plate 16 was set in an insert molding die, and a molten plastic magnet material (raw material: PA12 and strontium ferrite powder) was injected to form a plastic magnet plate 17 almost identical in shape to the fixing member plate 16 shown in FIG. 8.

Next, the fixing member plate 16 and the plastic magnet plate 17 were subjected to a heat-curing treatment at a temperature equal to or higher than a crosslinking reaction starting temperature, so that a crosslinking reaction was caused to occur to carry out a curing reaction in the thermosetting resin adhesive layer 19, thereby obtaining the dumbbell test piece 15 shown in FIG. 8. Magnetization was not performed.

The obtained dumbbell test piece 15 for evaluation of adhesive strength was subjected to a tensile shear test for examining a force required to break the thermosetting resin adhesive layer 19 by drawing the dumbbell test piece 15 at its both ends in opposite directions in accordance with test conditions in JIS K6850, so that a peeling strength of the dumbbell test piece 15 was measured. Here, the peeling strength represents adhesive strength.

Since the step of preparing the dumbbell test piece 15 for evaluation of adhesive strength conforms to the embodiment of the method for producing the insert-molded article, the obtained peeling strength of the dumbbell test piece may correspond to the adhesive strength of the insert-molded article (magnetic encoder 1) prepared in the same manner as in the case of the dumbbell test piece 15.

The obtained results are shown in Table 1.

The adhesive strength change ratio is determined to fall within an acceptable range, when the tensile strength of the article after the salt water spraying test is minus 20% or more with respect to articles at the production initial stage, a smaller change ratio is more desirable.

**[Table 1]**

| Evaluated articles | Invention article 1 | Comparative article 1 | Comparative article 2 |
|---|---|---|---|
| (1) Production initial stage | 93.3 | 100.0 | 77.5 |
| (2) Spraying of salt water for 168 h | 90.9 | 85.8 | 40.6 |
| (3) Spraying of salt water for 408 h | 82.2 | 80.5 | 34.4 |

The values in the table are relative values (dimensionless) based on the result of the comparative article 1 in the production initial stage where the result of the comparative article 1 in the production initial stage is 100.

The results in Table 1 show that in the invention article 1, the change of tensile strength fell within an acceptable range with respect to the tensile strength in the production initial stage in (1) even after the accelerated degradation tests shown in (2) and (3) were conducted. Therefore, it is apparent that the invention article 1 stably retains quality as a magnetic encoder, in particular, adhesive strength, because the plastic magnet section has sufficient adhesive strength even when the use environment is changed.

Comparison among articles at the production initial stage showed that the invention article 1 had slightly lower tensile strength (about minus 7%) as compared to the comparative article 1. Comparison among articles after spraying of salt water showed that the invention article 1 had a smaller tensile strength change ratio with respect to the articles at the production initial stage as compared to the comparative article 1. Therefore, in the invention article 1, reduction in tensile strength due to a factor such as salt water hardly occurred, and thus quality was stably retained.

The comparative article 2 had low initial strength, and its quality was evidently degraded in the accelerated degradation tests shown in (2) and (3). These results show the following. An adhesive layer may be directly stacked on a surface of a zinc-aluminum-magnesium alloy plated layer. Under the situation, if the corrosion product as a source of a rust is generated, the corrosion product reduces bonding strength between the plated layer and the adhesive layer, leading to impairment of stability of adhesive strength.

### REFERENCE SIGNS LIST

- 1: Magnetic encoder
- 2: Core metal
- 3: Plastic magnet section (plastic magnet layer)
- 4: Intermediate layer
- 5a: Upper surface of the core metal 2
- 5b: Outer surface of the core metal 2
- 5c: Inner surface of the core metal 2
- 6, 7: Seal member
- 10: Sensor
- 11, 11a: Bearing device
- 12: Inner ring
- 12A: Inner ring orbital surface
- 13: Outer ring
- 13A: Outer ring orbital surface
- 14: Rolling body
- 15: Dumbbell test piece for evaluation of adhesive strength
- 16: Fixing member plate
- 17: Plastic magnet plate
- 18: Precise universal tester
- 19: Thermosetting resin adhesive layer
- 21: Injection molding die
- 22: Fixed-side mounting plate
- 23: Movable-side mounting plate
- 24: Fixed-side die plate
- 25: Movable-side die plate
- 26: Sprue
- 27: Runner
- 28: Gate
- 29: Insert core
- 30, 31: Ejector
- C: Cavity
- P: Molten plastic magnet material
- PL: Parting line

## Claims

1. A magnetic encoder being attachable to a rotator provided in a device for detecting a rotation number of an automobile wheel or a rotation number detector for a relatively rotatable bearing section comprising:
a core metal made of a cold rolled steel plate;
an annular plastic magnet section magnetized multi-polarly in a circumferential direction;
a plated layer containing a zinc-aluminum-magnesium alloy stacked on a surface of the core metal;
a phosphoric acid salt film layer stacked on a surface of the plated layer;
an adhesive layer stacked on the phosphoric acid salt film layer; and
a plastic magnet layer stacked on the adhesive layer.

2. The magnetic encoder according to claim 1, wherein the cold rolled steel is at least one steel material selected from the group consisting of SPCC, SPCD and SPCE as specified in JIS G 3141.

3. The magnetic encoder according to claim 1 or 2, wherein the adhesive layer includes a phenol-based adhesive or an epoxy-based adhesive.

4. The magnetic encoder according to any one of claims 1 to 3, wherein a silane-based or epoxy-based primer is applied to a surface of the phosphoric acid salt film layer.

5. A method for producing a magnetic encoder being attachable to a rotator provided in a device for detecting a rotation number of an automobile wheel or a rotation number detector for a relatively rotatablebearing section, the method comprising:
applying an adhesive onto a phosphoric acid salt film layer of a core metal made of a cold rolled steel plate with a zinc-aluminum-magnesium alloy plated layer formed on a surface thereof and the phosphoric acid salt film layer formed on a surface of the plated layer;
drying and solidifying the adhesive at a temperature lower than a crosslinking and curing reaction starting temperature of the adhesive;
injection-molding a molten plastic magnet material on a surface of the adhesive; and
performing a heat-curing treatment at a temperature equal to or higher than the crosslinking and curing reaction starting temperature of the adhesive.

6. The method for producing a magnetic encoder according to claim 5, wherein the cold rolled steel is at least one steel material selected from the group consisting of SPCC, SPCD and SPCE as specified in JIS G 3141.

## Patentansprüche

1. Magnetischer Codierer, der an einem Rotator befestigbar ist, der in einer Vorrichtung zum Erfassen der Drehzahl eines Rades eines Automobils oder in einem Drehzahldetektor für einen relativ drehbaren Lagerabschnitt bereitgestellt wird, mit:
einem Kernmetall, das aus einem kaltgewalzten Stahlblech hergestellt ist;
einem ringförmigen Kunststoffmagnetabschnitt, der in einer Umfangsrichtung multipolar magnetisiert ist;
einer plattierten Schicht, die eine Zink-Aluminium-Magnesium-Legierung enthält und auf einer Oberfläche des Kernmetalls aufgebracht ist;
einer Phosphorsäuresalzfilmschicht, die auf einer Oberfläche der plattierten Schicht aufgebracht ist;
einer Klebstoffschicht, die auf der Phosphorsäuresalzfilmschicht aufgebracht ist; und
einer Kunststoffmagnetschicht, die auf der Klebstoffschicht aufgebracht ist.

2. Magnetischer Codierer nach Anspruch 1, wobei der kaltgewalzte Stahl mindestens ein Stahlmaterial ist, das ausgewählt ist aus der Gruppe bestehend aus SPCC, SPCD und SPCE, wie in JIS G 3141 spezifiziert ist.

3. Magnetischer Codierer nach Anspruch 1 oder 2, wobei die Klebstoffschicht einen Klebstoff auf Phenolbasis oder einen Klebstoff auf Epoxidbasis enthält.

4. Magnetischer Codierer nach einem der Ansprüche 1 bis 3, wobei ein Primer auf Silan- oder Epoxidbasis auf einer Oberfläche der Phosphorsäuresalzfilmschicht aufgebracht ist.

5. Verfahren zum Herstellen eines magnetischen Codierers, der an einem Rotator befestigbar ist, der in einer Vorrichtung zum Erfassen der Drehzahl eines Rades eines Automobils oder in einem Drehzahldetektor für einen relativ drehbaren Lagerabschnitt bereitgestellt wird, wobei das Verfahren die Schritte aufweist:
Aufbringen eines Klebstoffs auf eine Phosphorsäuresalzfilmschicht eines Kernmetalls, das aus einem kaltgewalzten Stahlblech mit einer auf einer Oberfläche davon ausgebildeten plattierten Zink-Aluminium-Magnesium-Legierungsschicht hergestellt ist, wobei die Phosphorsäuresalzfilmschicht auf einer Oberfläche der plattierten Schicht ausgebildet wird;
Trocknen und Verfestigen des Klebstoffs bei einer Temperatur, die niedriger ist als eine Starttemperatur einer Vernetzungs- und Aushärtungsreaktion des Klebstoffs;
Spritzgießen eines geschmolzenen Kunststoffmagnetmaterials auf eine Oberfläche des Klebstoffs; und
Ausführen einer Warmaushärtungsbehandlung bei einer Temperatur, die der Starttemperatur der Vemetzungs- und Aushärtungsreaktion des Klebstoffs entspricht oder höher ist.

6. Verfahren zum Herstellen eines magnetischen Codierers nach Anspruch 5, wobei der kaltgewalzte Stahl mindestens ein Stahlmaterial ist, das ausgewählt ist aus der Gruppe bestehend aus SPCC, SPCD und SPCE, wie in JIS G 3141 spezifiziert ist.

## Revendications

1. Encodeur magnétique pouvant être fixé à un rotateur fourni dans un dispositif pour détecter un nombre de rotation d'une roue d'automobile ou un détecteur de nombre de rotation pour une section de palier relativement rotative comprenant :
un métal de noyau constitué d'une plaque d'acier laminée à froid ;
une section d'aimant plastique annulaire magnétisée multi-polairement dans une direction circonférentielle ;
une couche plaquée contenant un alliage de zinc-aluminium-magnésium empilée sur une surface du métal de noyau ;
une couche de film de sel d'acide phosphorique empilée sur une surface de la couche plaquée ;
une couche adhésive empilée sur la couche de film de sel d'acide phosphorique ; et
une couche d'aimant plastique empilée sur la couche adhésive.

2. Encodeur magnétique selon la revendication 1, dans lequel l'acier laminé à froid est au moins un matériau d'acier choisi dans le groupe consistant en SPCC, SPCD et SPCE comme spécifié dans JIS G 3141.

3. Encodeur magnétique selon la revendication 1 ou 2, dans lequel la couche adhésive inclut un adhésif à base de phénol ou un adhésif à base d'époxy.

4. Encodeur magnétique selon l'une quelconque des revendications 1 à 3, dans lequel un apprêt à base de silane ou à base d'époxy est appliqué sur une surface de la couche de film de sel d'acide phosphorique.

5. Procédé de production d'un encodeur magnétique pouvant être fixé à un rotateur fourni dans un dispositif pour détecter un nombre de rotation d'une roue d'automobile ou un détecteur de nombre de rotation pour une section de palier relativement rotative, le procédé comprenant :
l'application d'un adhésif sur une couche de film de sel d'acide phosphorique d'un métal de noyau constitué d'une plaque d'acier laminée à froid avec une couche plaquée d'alliage de zinc-aluminium-magnésium formée sur une surface de celle-ci et la couche de film de sel d'acide phosphorique formée sur une surface de la couche plaquée ;
le séchage et la solidification de l'adhésif à une température inférieure à une température de démarrage de réaction de réticulation et de durcissement de l'adhésif ;
le moulage par injection d'un matériau d'aimant plastique fondu sur une surface de l'adhésif ; et
la réalisation d'un traitement de thermodurcissement à une température supérieure ou égale à la température de démarrage de réaction de réticulation et de durcissement de l'adhésif.

6. Procédé de production d'un encodeur magnétique selon la revendication 5, dans lequel l'acier laminé à froid est au moins un matériau d'acier choisi dans le groupe consistant en SPCC, SPCD et SPCE comme spécifié dans JIS G 3141.
